# EUROPEAN PATENT SPECIFICATION

(11) **EP 2 074 856 B1**
(45) Date of publication and mention of the grant of the patent: **08.11.2017**
(21) Application number: 07835041.0
(22) Date of filing: 11.09.2007
(51) Int. Cl.: H04W 28/24

(54) **RAB DIFFERENTIATION BETWEEN NETWORK OPERATORS IN SHARED NETWORK**
RAB-DIFFERENZIERUNG ZWISCHEN NETZWERKBETREIBERN IN EINEM GEMEINSAM BENUTZEN NETZWERK
DIFFÉRENCIATION RAB ENTRE DES OPÉRATEURS DE RÉSEAU DANS UN RÉSEAU PARTAGÉ

(30) Priority: 18.10.2006 SE 0602174
(43) Date of publication of application: 01.07.2009
(73) Proprietor: Telia Company AB, 106 63 Stockholm (SE)
(72) Inventor: ROSENLUND, Henrik, 128 62 Sköndal (SE); LAVASANI, Shahab, 191 46 Sollentuna (SE)
(74) Representative: Groth & Co. KB
(86) International application number: PCT/SE2007/000783
(87) International publication number: WO 2008/048158

(56) References cited:
- EP-A1- 1 443 790
- EP-A1- 1 475 980
- WO-A-2004/030393
- WO-A2-2006/103093
- US-A1- 2004 162 077
- US-A1- 2006 073 831
- "3rd Generation Partnership Project; Technical Specification Group Services and System Aspects; Service aspects and requirements for network sharing (release 6)" INTERNET CITATION, [Online] XP002301277 Retrieved from the Internet: URL:http:www.3gpp.org/ftp/Specs/html-info/ 22951.htm> [retrieved on 2004-10-18]
- 'Universal Mobile Telecommunications System (UMTS); NETWORK SHARING; ARCHITECTURE AND FUNCTIONAL DESCRIPTION (3GPP TS 23.251 VERSION 6.3.0 RELEASE 6)' ETSI TS 123 251 V6.3.0 March 2005, pages 1 - 19, XP014027542

## Description

### Technical Field

The present invention relates to a telecommunications system and a method for differentiation of bearer services between different operators in a shared network of the operators.

### Prior Art

Having shared communications networks is a way for operators to share large construction costs of mobile networks. In the field of mobile telephony and telecommunications, it becomes more and more important to achieve functionality which makes possible different forms of shared networks. A shared network architecture shall allow different operators to connect themselves to a shared Radio Access Network, RAN. The operators do not only share the radio network elements, but also the radio resources of the network per se. Today there are on the whole two standardized network architectures for shared/common networks. These two are MOCN (Multi-Operator Core Network) and GWCN (Gateway Core Network), which have in common that the RAN is shared/in common. Different core networks, CN, are connected to the shared RAN via an Iu interface. In the GWCN, together with the RAN, certain parts of CN are shared as well. These two network architectures are described in more detail in the detailed description.

In principle, the RAN is formed by two different types of nodes: The Base Station, BS, (Node B) and the Radio Network Controller, RNC. The BS manages radio transmission/- reception to/from subscribers' User Equipment, UE, via the radio interface, the so called uu interface. The UE is a combination of the mobile equipment, ME, and the mobile subscriber identity, IMSI, SIM etc. The BS is controlled from the RNC via the lub interface. A BS can manage one or more cells. The RNC is the node which controls the functions of the RAN. The RNC connects the RAN to the CN via the lu interface. There are two distinct roles for the RNC, to provide service and to control. The service supplying RNC (SRNC) has the overall control over the UE which is connected to the RAN. The controlling RNC (CRNC) has the overall control over a certain number of cells and BS belonging thereto. When the UE has to use resources in a cell which is not controlled by its SRNC, the SRNC must request the controlling RCN for these resources.

The principal service offered by the RAN is the Radio Access Bearer Service, RAB. To establish a call between the UE and the BS, the RAB is needed. The characteristics of the RAB are different depending on the type of service/information to be transported. The RAB carries subscriber data between the UE and the CN. The RAB is characterized by certain QoS parameters, such as bit rate, delay etc. The CN selects a RAB with suitable QoS (Quality of Service) based on the service requested by the subscriber, and asks the RNC to supply such a RAB.

In the two above-mentioned network architectures all RAB in the shared RAN are accessible to all CN operators. Consequently, the RAN operator cannot implement certain RAB with certain QoS to a certain CN operator, because this RAB will be accessible to all other CN operators. The MOCN and the GWCN provide no restrictions in the RNC for allocation of RAB. Thus, there is no differentiation of services at RAB level between the CN operators.

By the development from a GWCN architecture to a MOCN architecture, where the CN operators have their own CN connected to a shared RAN, service differentiation and own specified RAB in the RAN will be more and more important to the CN operators.

EP-1475980-A1 describes a telecommunication system comprising a shared network with four nodes and a first core network belonging to a first operator and a second core network belonging to a second operator.

WAO-A1 -01/80589 describes a communications network including a digital market place which provides a dynamic selection of network operators and service operators in the market place for the user. The user can communicate with the digital market place via a logic market channel which makes it possible to for users, service operators and network operators to interact in real time and negotiate about suitable communication links and QoS.

US-A1-2005/0157652 describes a satellite communications system which includes shared equipment which is used in common by a plurality of different networks. The shared equipment is possible to reconfigure and to extend, and provides changed communication capacity and -functions when extra elements are added or reconfigured. Characteristics possible to configure include bandwidth, QoS and satellites which are included in the communications system.

WO-A1-2004/030393 describes a telecommunications system which includes one single core network, CN, and a shared radio access network, RAN, which is shared by a plurality of operators of the type MVNO, Mobile Virtual Network Operator. The shared RAN in its turn includes two Radio Network Controllers, RNC, which are connected to the single CN, which in its turn includes a MSC, Mobile Switching Centre. The two RNC include independent resource controllers for each operator. These resource controllers allocate radio resource to a subscriber's terminal depending on an operator's identity associated with a service for the subscriber terminal, so that different QoS are provided for different operators. Available RAN resource is divided into a first part for a first operator and a second part for a second operator, and said resource controllers are arranged to allocate resource from the first part if the operator's identity corresponds to the first operator and from the second part if the operator's identity corresponds to the second operator. This makes a separation of resources possible, where each operator has an allocated resource which can be allocated and managed according to the specific QoS preferences of this operator.

However, there are disadvantages with the system described in WO-A1-2004/030393. Among other things, each operator of the type MVNO separately controls certain QoS parameters directly for its subscribers, and the operator of the RAN has no influence over these QoS parameters.

### The Object of the Invention

The object of the present invention is thus to make possible and facilitate differentiation of services between different operators in a shared network of the operators and overcome the above-mentioned problems.

### Summary of the Invention

The above-mentioned object of the present invention is achieved by providing a telecommunications system, method and computer program product as defined in the independent claims. According to an advantageous embodiment of the telecommunications system according to the present invention, the shared network is in the form of a Radio Access Network, RAN, the node for controlling the functions of the RAN is in the form of a Radio Network Controller, RNC, and the bearer services comprise Radio Access Bearer services, RAB.

The radio network is generally formed by a plurality of RNC which serve different geographical areas. The invention makes it possible to have different RAB sets in different areas, whereby different services can be provided in different areas.

According to a further embodiment of the telecommunications system according to the present invention, for each core network there is at least one interface for circuit switched, CS, data between the core network and the shared network, and at least one interface for packet switched, PS, data between the core network and the shared network. By identifying these two interfaces separately, the RAN operator can offer different combinations of CS and PS RAB, so called multi RAB, to the core network operators.

Further embodiments of the telecommunications system according to the present invention emerge from the dependent claims.

Advantageous embodiments of the method according to the present invention emerge from the dependent claims.

The present invention may be implemented in UMTS networks and is, inter alia, compatible with 3GPP.

### Brief Description of the Drawings

The present invention will now be described, for exemplary purposes, in more detail by means of examples of embodiments and with reference to the enclosed drawings, in which:
- Figure 1: shows a schematic block diagram illustrating a GWCN according to prior art;
- Figure 2: shows a schematic block diagram illustrating a MOCN according to prior art;
- Figure 3: shows an embodiment of the telecommunications system according to the present invention;
- Figure 4: shows a flow chart illustrating an embodiment of the method according to the present invention; and
- Figure 5: shows a schematic view of an embodiment of the computer program product according to the present invention.

### Detailed Description of Preferred Embodiments

### Abbreviations

- 3 GPP: 3^{rd} Generation Partnership Project
- BSC: Base Station Controller
- CN: Core Network
- DL: Downlink
- GPRS: General Packet Radio Service
- GWCN: Gateway Core Network
- H PLMN: Home PLMN
- HSPDA: High Speed Downlink Packet Access
- HSUPA: High Speed Uplink Packet Access
- IMSI: International Mobile Subscriber Identity
- MOCN: Multi Operator Core Network
- MSC: Mobile Switching Centre
- MVNO: Mobile Virtual Network Operator
- NRI: Network Resource Identifier
- NS: Network Sharing
- PLMN: Public Land Mobile Network
- RAB: Radio Access Bearer
- RAN: Radio Access Network
- RANAP: Radio Access Network Application Part
- RNC: Radio Network Controller
- SGSN: Serving GPRS Support Node
- SRNC: Serving RNC
- UE: User Equipment
- UMTS: Universal Mobile Telecommunications System
- UL: Uplink
- UTRAN: UMTS Terrestrial Radio Access Network
- QoS: Quality of Service

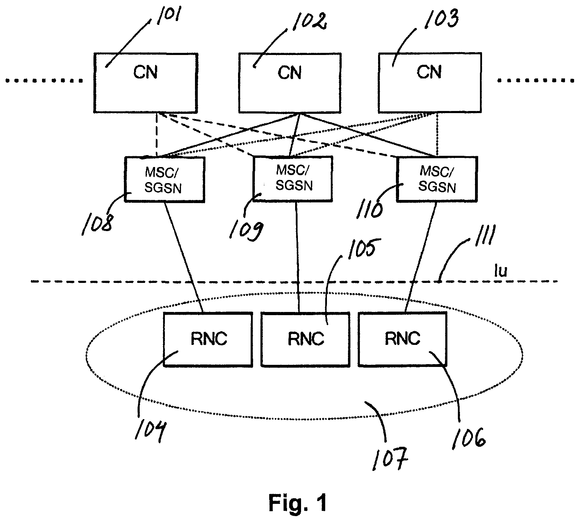

Figure 1 illustrates a GWCN architecture according to prior art, where three CN operators, each having a CN 101 ,102, 103, share the same RNC 104, 105, 106, which are included in a shared RAN 107 of the CN operators, which is managed by a RAN operator. The CN operators furthermore have shared CN nodes 108, 109, 110 in the form of MSC and SGSN. Each CN 101, 102, 103 is connected to the shared RAN 107 via an Iu interface 111.

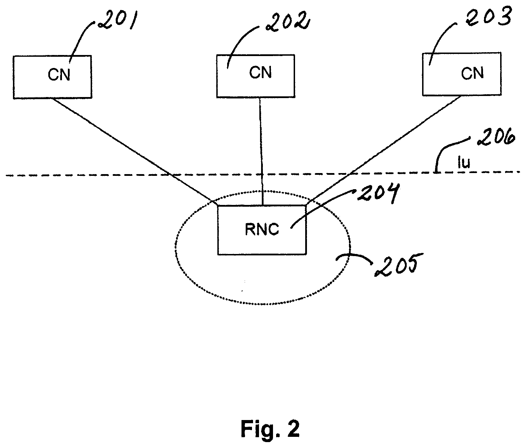

Figure 2 illustrates a MOCN architecture according to prior art, where three CN operators, each having a CN 201, 202, 203, share the same RNC 204 which is included in a shared RAN 205 of the CN operators, which is managed by a RAN operator. Each CN 201, 202, 203 is connected to the shared RAN 205 via an Iu interface 206.

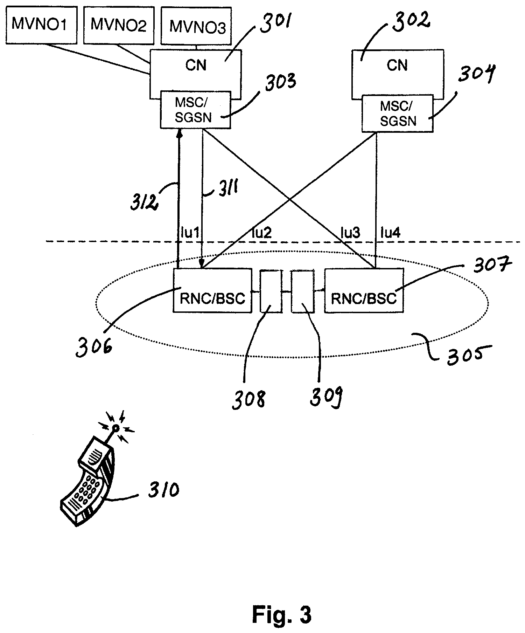

Figure 3 shows an embodiment of the telecommunications system according to the present invention, based on the MOCN architecture. The system comprises two CN 301, 302 comprising own CN nodes 303, 304 in the form of MSC and SGSN, where the first CN 301 belongs to a first operator and the second CN 302 belongs to a second operator. The system further comprises a shared RAN 305 of the CN operators, which comprises two shared RNC 306, 307 of the CN operators for controlling the functions of the shared RAN 305, respective RNC 306, 307 being arranged to connect the RAN 305 to the respective CN 301, 302 via different Iu interfaces Iu1, Iu2, Iu3, Iu4, where the RNC 306, 307 are arranged to connect the RAN 305 to the first CN 301 via the first and the third Iu interface Iu1, Iu3 and arranged to connect the RAN 305 to the second CN 302 via the second and the fourth Iu interface Iu2, Iu4.

The system comprises a storing means 308, a functional entity, provided in the RAN 305 for storing information about which RAB are accessible to the CN operators via a certain Iu interface Iu1, Iu2, Iu3, Iu4, where the storing means 308 is arranged to store information about which RAB are accessible to the CN operators via a certain Iu interface Iu1, Iu2, Iu3, Iu4, based on agreements between a CN operator and the RAN operator, where the parameters of the RAB are predefined by said agreements. The storing means 308 can also be arranged to store further information such as specific radio characteristics, for instance allowed HSPDA and/or HSUPA for a specific Iu interface. The system further comprises selection means 309 for selecting RAB for respective CN operator, where the selection means 309 is arranged to base the selection on the interfaces Iu1, Iu2, Iu3, Iu4 of CN 301, 302, to the shared RAN 305. Thus, in the present invention the different RAB are selected based on respective CN operator's Iu interface Iu1, Iu2, Iu3, Iu4. The system is arranged such that all subscribers who are connected via the same Iu interface Iu1, Iu2, Iu3, Iu4, is provided with the same RAB for the same service, and the service level which that RAB refers to with the attributes and setting associated with this RAB.

In the RNC 306, 307 each CN operator is identified by the current Iu interface Iu1, Iu2, Iu3, Iu4. When the UE 310, a subscriber, sends a service request, a connection request for this service is made to CN 301 with which the UE 310 has an agreement. The CN 301 then makes a QoS request depending on the RAB attributes of this service with the UTRAN, and a suitable RAB is established. The QoS-request is made by the CN 301 at initiation of the RAB allocation to the SRNC 306 and is sent in a message with a RAB allocation request 311, which message includes RAB parameters, transport address etc. When the CN 301 initiates a RAB designation, the CN 301 can request the RAN 305 to establish, modify or disengage one or more RAB. The aim of the RAB designation is to establish new RAB and/or make modifications and/or disengagement of already established RAB for a given UE 310 possible. If the UE 310 is a subscriber of the operator of the first CN 301 (or a MVNO associated with said CN operator or a roaming partner of said CN operator), the UE 310 obtains services from the first CN 301. In this case the UE 310 is connected to the first CN 301 when the UE 310 initiates a service request. The operator of the first CN 301 has an agreement with the RAN operator regarding which RAB that can be designated to the UE 310, which is a subscriber of the first CN 301. A similar agreement is made between the RAN operator and the operator of the second CN 302. The RAN operator will have full control of settings of the RAB-parameters because the RAB parameters in the normal case are predefined and not possible to modify by the CN operator.

Upon reception of a message for the RAB allocation request, where the CN 301 tries to initiate an invalid RAB to a UE 310 in the area where the requested RAB is not provided for this Iu interface Iu1, Iu2, Iu3, Iu4 according to the information in the storing means 308, the RNC 306 communicates to the CN 301, in a RAB designation reply 312, that the establishing/modification of RAB failed. Upon such a failed establishing/modification, the RNC 301 preferably informs about the cause of the failed establishing/modification. When the CN 301 is informed about the cause, the CN 301 can instead select to establish a service with lower QoS.

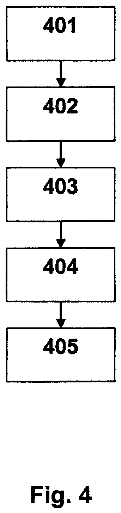

Figure 4 shows a flow chart illustrating the method according to the present invention in a telecommunications system as described in connection to Figure 3, where at least two CN are connected, at 401, via different Iu interfaces to the shared RAN. Information is stored, at 402, in the shared RAN, about which RAB are accessible to the CN operators via a certain Iu interface based on agreement between a CN operator and the operator of the shared RAN. A request for RAB allocation from a CN is received, at 403, whereupon a selection, at 404, of bearer services to the CN operator is performed, where the selection is based on CN's interface to the shared RAN and the stored information. Providing RAB, at 405, where the same RAB is provided for the same service to all subscribers of a CN operator which is connected via the same Iu interface between the shared RAN and the operator's CN.

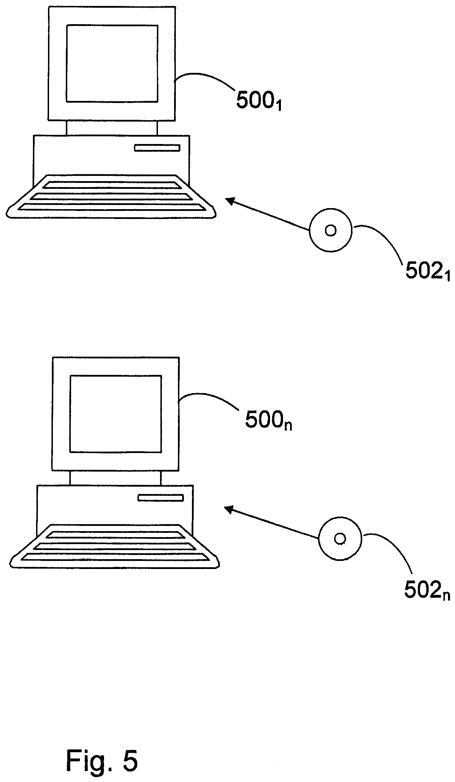

In Figure 5, a schematic view of some computer program products according to the present invention is shown. In Figure 5, n different digital computers 500₁,..., 500ₙ are shown, wherein n is an integer, and n different computer program products 502₁,...,502ₙ, here shown in form of compact discs. The different computer program products 502₁,... ,502ₙ are directly loadable into the internal memory of the n different digital computers 500₁,...,500ₙ. Each computer program product 502₁,..., 502ₙ comprises software code portions for performing some, or all, steps of the method according to Figure 4 when the product/products 502₁,..., 502ₙ is/are run on said computer 500₁,..., 500ₙ. The computer program products 502₁,...,502ₙ can, for instance, be in the form of floppy disks, RAM disks, magnetic tapes, opto magnetical disks or any other suitable products.

By the present invention, the RAN operator can buy RAB, i.e. the possibility to, in his network, support certain fixed parameter sets in his UTRAN network, from his supplier and then, independently, offer these to the CN operators. The CN operators, in their turn, can by agreement on certain types of RAB and RAB combinations, independently of each other offer different service levels in the radio network to their subscribers. Each CN operator can have his own RAB combination in different service areas. The invention can be implemented in SRNC in the RAN operator's network, for instance a UMTS network.

The invention complies well with the general UTRAN architecture where the UE requests a service from the CN which in its turn performs a negotiation about which parameters that can be supported in a specific case. The CN operator and all MVNO operators and roaming partners will utilize the same predefined RAB sets for the same service. By the present invention the use of radio resources is not affected by restrictions regarding division into partitions for the different operators. The CN can, for instance, be formed by only MSC for the CS domain for each operator, or only SGSN for the PS domain for each operator, or both types for both operators.

The invention is not limited to the described embodiments. It will be clear to a person skilled in the art that many different modifications are possible within the scope of the following claims.

## Claims

1. A telecommunications system for differentiation of bearer services between different operators in a shared network (305) of the operators, the shared network (305) being included in said telecommunications system, which telecommunications system in addition comprises at least a first and second core networks (301, 302), where the first core network (301) belongs to a first operator, and the second core network (302) belongs to a second operator, and at least one node (306, 307), included in the shared network (305), for controlling the functions of the shared network (305), said node (306, 307) connecting the shared network (305) to the first and second core network (301 ,302), **characterized in that** the at least first and second core networks (301, 302) are arranged to be connected via different interfaces (Iu1, Iu2, Iu3, Iu4) to the shared network (305), and **in that** the system comprises selection means (309) for selecting bearer services for the first and second core network operators, where the selection means (309) is arranged to base the selection of the bearer services on the interface (Iu1, Iu2, Iu3, Iu4) of the first and second core networks (301, 302) to the shared network (305).

2. A telecommunications system as claimed in claim 1, **characterized in that** the system comprises storing means (308) for storing information about which bearer services are accessible to the first and second operators of the first and second core networks (301, 302) via the different interfaces (Iu1, Iu2, Iu3, Iu4), the selection means (309) is arranged to base the selection on this information.

3. A telecommunications system as claimed in claim 2, **characterized in that** said storing means (308) is provided in the shared network (305).

4. A telecommunications system as claimed in claim 2 or 3, **characteriz ed** in that the information about which bearer services are accessible to the first and second operators of the first and second core networks (301, 302) via the different interfaces (Iu1, Iu2, Iu3, Iu4) is based on agreements made in advance between the first and second operators of the first and second core networks (301, 302) and an operator of the shared network (305).

5. A telecommunications system as claimed in any of the claims 1-4, **chara cterized** in that the system is arranged to provide all subscribers associated with the first and second operators of the first and second core networks (301, 302), which are connected via one and the same interface (Iu1, Iu2, Iu3, Iu4) between the shared network (305) and the first and second operator's first and second core networks (301, 302), with the same bearer services for the same service.

6. A telecommunications system as claimed in any of the claims 1-5, **chara cterized** in that for each of the first and second core networks (301, 302) there is at least one interface (Iu1, Iu2, Iu3, Iu4) for circuit switched data between the first and second core networks (301, 302) and the shared network (305) and at least one interface (Iu1, Iu2, Iu3, Iu4) for packet switched data between the first and second core networks (301, 302) and the shared network (305).

7. A telecommunications system as claimed in any of the claims 1 -6, **char acterized** in that the shared network (305) is in the form of a Radio Access Network (305), RAN, in that the node (306, 307) for controlling the functions of the RAN (305) is in the form of a Radio Network Controller (306, 307), RNC, and in that the bearer services comprise Radio Access Bearer services, RAB.

8. A method for differentiating bearer services between different operators in a shared network (305) of the operators, the shared network (305) being included in a telecommunications system, which telecommunications system in addition comprises at least a first ans second core networks (301, 302), where the first core network (301) belongs to a first operator, and the second core network (302) belongs to a second operator, and at least one node (306, 307), included in the shared network (305), for controlling the functions of the shared network (305), said node (306,307) connecting the shared network (305) to the first and second core networks (301, 302), **characterized by** connecting the at least first and second core networks (301, 302) via different interfaces (Iu1, Iu2, Iu3, Iu4) to the shared network (305), and by selecting bearer services to the first and second core network operators, where the selection is based on the interface (Iu1, Iu2, Iu3, Iu4) of the first and second core networks (301, 302) to the shared network (305).

9. A method as claimed in claim 8, **characterized by** storing information in the shared network (305) about which bearer services are accessible to the first and second operators of the first and second core networks (301, 302) via the different interfaces (Iu1, Iu2, Iu3, Iu4), the selection being based on this information.

10. A method as claimed in claim 9, **characterized in that** the information about which bearer services are accessible to the first and second operators of the first and second core networks (301, 302) via the different interfaces (Iu1, Iu2, Iu3, Iu4) is based on agreements made in advance between the first and second operators of the first and second core networks (301, 302) and an operator of the shared network (305).

11. A method as claimed in any of the claims 8-10, **characterized in that** all subscribers associated with the first and second operators of the first and second core networks (301, 302), which are connected via one and the same interface (Iu1, Iu2, Iu3, Iu4) between the shared network (305) and the first and second operator's first and second core networks (301, 302), are provided with the same bearer services for the same service.

12. Computer program product (502₁,..., 502ₙ) directly loadable into the internal memory of at least one digital computer (500₁,..., 500ₙ), comprising software code portions for performing the steps according to any of the claims 8-11 when said product (502₁,..., 502ₙ) is run on said computer (500₁,..., 500ₙ).

## Patentansprüche

1. Telekommunikationssystem zur Unterscheidung von Übermittlungsdiensten zwischen verschiedenen Betreibern in einem gemeinsam genutzten Netzwerk (305) der Betreiber, wobei das gemeinsam genutzte Netzwerk (305) im Telekommunikationssystem enthalten ist, wobei das Telekommunikationssystem darüber hinaus mindestens ein erstes und ein zweites Kernnetz (301, 302) enthält, wobei das erste Kernnetz (301) einem ersten Betreiber gehört und das zweite Kernnetz (302) einem zweiten Betreiber gehört und mindestens ein im gemeinsam genutzten Netzwerk (305) enthaltener Knoten (306, 307) die Funktionen des gemeinsam genutzten Netzwerks (305) steuert, wobei der Knoten (306, 307) das gemeinsam genutzte Netzwerk (305) mit dem ersten und dem zweiten Kernnetz (301, 302) verbindet, **dadurch gekennzeichnet, dass** mindestens das erste und das zweite Kernnetz (301, 302) angelegt sind, über unterschiedliche Schnittstellen (lu1, lu2, lu3, lu4) mit dem gemeinsam genutzten Netzwerk (305) verbunden zu werden, und dadurch, dass das System ein Auswahlmittel (309) zum Auswählen von Übermittlungsdiensten für die Betreiber des ersten und des zweiten Kernnetzes umfasst, wobei das Auswahlmittel (309) angelegt ist, die Auswahl der Übermittlungsdienste auf der Schnittstelle (lu1, lu2, lu3, lu4) des ersten und des zweiten Kernnetzes (301, 302) mit dem gemeinsam genutzten Netzwerk (305) zu basieren.

2. Telekommunikationssystem nach Anspruch 1, **dadurch gekennzeichnet, dass** das System ein Speichermittel (308) zum Speichern von Informationen darüber umfasst, welche Übermittlungsdienste dem ersten und dem zweiten Betreiber des ersten und des zweiten Kernnetzes (301, 302) über die verschiedenen Schnittstellen (lu1, lu2, lu3, lu4) zugänglich sind, wobei das Auswahlmittel (309) angelegt ist, die Auswahl auf diesen Informationen zu basieren.

3. Telekommunikationssystem nach Anspruch 2, **dadurch gekennzeichnet, dass** das Speichermittel (308) im gemeinsam genutzten Netzwerk (305) zur Verfügung gestellt wird.

4. Telekommunikationssystem nach Anspruch 2 oder 3, **dadurch gekennzeichnet, dass** die Informationen darüber, welche Übermittlungsdienste dem ersten und dem zweiten Betreiber des ersten und des zweiten Kernnetzes (301, 302) über die verschiedenen Schnittstellen (lu1, lu2, lu3, lu4) zugänglich sind, auf Vereinbarungen basieren, die vorab zwischen dem ersten und dem zweiten Betreiber des ersten und des zweiten Kernnetzes (301, 302) und einem Betreiber des gemeinsam genutzten Netzwerks (305) getroffen wurden.

5. Telekommunikationssystem nach einem der Ansprüche 1-4, **dadurch gekennzeichnet, dass** das System angelegt ist, allen Teilnehmern, die mit dem ersten und dem zweiten Betreiber des ersten und des zweiten Kernnetzes (301, 302) assoziiert sind, die über ein und dieselbe Schnittstelle (lu1, lu2, lu3, lu4) zwischen dem gemeinsam genutzten Netzwerk (305) und dem ersten und dem zweiten Kernnetz (301, 302) des ersten und des zweiten Betreibers verbunden sind, die gleichen Übermittlungsdienste für den gleichen Dienst bereitzustellen.

6. Telekommunikationssystem nach einem der Ansprüche 1-5, **dadurch gekennzeichnet, dass** es für jedes des ersten und des zweiten Kernnetzes (301, 302) mindestens eine Schnittstelle (lu1, lu2, lu3, lu4) für leitungsvermittelte Daten zwischen dem ersten und zweiten Kernnetz (301, 302) und dem gemeinsam genutzten Netzwerk (305) und mindestens eine Schnittstelle (lu1, lu2, lu3, lu4) für paketvermittelte Daten zwischen dem ersten und zweiten Kernnetz (301, 302) und dem gemeinsam genutzten Netzwerk (305) gibt.

7. Telekommunikationssystem nach einem der Ansprüche 1-6, **dadurch gekennzeichnet, dass** das gemeinsam genutzte Netzwerk (305) in Form eines Funkzugangsnetzes (305), RAN, ist, dass der Knoten (306, 307) zum Steuern der Funktionen des RAN (305) in Form einer Funknetz-Steuereinrichtung (306, 307), RNC, ist und dass die Übermittlungsdienste Funkzugangs-Übermittlungsdienste, RAB, umfassen.

8. Verfahren zum Unterscheiden von Übermittlungsdiensten zwischen verschiedenen Betreibern in einem gemeinsam genutzten Netzwerk (305) der Betreiber, wobei das gemeinsam genutzte Netzwerk (305) in einem Telekommunikationssystem enthalten ist, wobei das Telekommunikationssystem darüber hinaus mindestens ein erstes und ein zweites Kernnetz (301, 302) umfasst, wobei das erste Kernnetz (301) einem ersten Betreiber gehört und das zweite Kernnetz (302) einem zweiten Betreiber gehört und mindestens ein im gemeinsam genutzten Netzwerk (305) enthaltener Knoten (306, 307) die Funktionen des gemeinsam genutzten Netzwerks (305) steuert, wobei der Knoten (306, 307) das gemeinsam genutzte Netzwerk (305) mit dem ersten und dem zweiten Kernnetz (301, 302) verbindet, **gekennzeichnet durch** Verbinden mindestens des ersten und des zweiten Kernnetzes (301, 302) über unterschiedliche Schnittstellen (lu1, lu2, lu3, lu4) mit dem gemeinsam genutzten Netzwerk (305) und **durch** Auswählen der Übermittlungsdienste an die Betreiber des ersten und des zweiten Kernnetzes, wobei die Auswahl auf der Schnittstelle (lu1, lu2, lu3, lu4) des ersten und des zweiten Kernnetzes (301, 302) mit dem gemeinsam genutzten Netzwerk (305) basiert.

9. Verfahren nach Anspruch 8, **gekennzeichnet durch** Speichern von Informationen im gemeinsam genutzten Netzwerk (305) darüber, welche Übermittlungsdienste dem ersten und dem zweiten Betreiber des ersten und des zweiten Kernnetzes (301, 302) über die verschiedenen Schnittstellen (lu1, lu2, lu3, lu4) zugänglich sind, wobei die Auswahl auf diesen Informationen basiert.

10. Verfahren nach Anspruch 9, **dadurch gekennzeichnet, dass** die Informationen darüber, welche Übermittlungsdienste dem ersten und dem zweiten Betreiber des ersten und des zweiten Kernnetzes (301, 302) über die verschiedenen Schnittstellen (lu1, lu2, lu3, lu4) zugänglich sind, auf Vereinbarungen basieren, die vorab zwischen dem ersten und dem zweiten Betreiber des ersten und des zweiten Kernnetzes (301, 302) und einem Betreiber des gemeinsam genutzten Netzwerks (305) getroffen wurden.

11. Verfahren nach einem der Ansprüche 8-10, **dadurch gekennzeichnet, dass** allen Teilnehmern, die mit dem ersten und dem zweiten Betreiber des ersten und des zweiten Kernnetzes (301, 302) assoziiert sind, die über ein und dieselbe Schnittstelle (lu1, lu2, lu3, lu4) zwischen dem gemeinsam genutzten Netzwerk (305) und dem ersten und dem zweiten Kernnetz (301, 302) des ersten und des zweiten Betreibers verbunden sind, die gleichen Übermittlungsdienste für den gleichen Dienst bereitgestellt werden.

12. Computerprogrammprodukt (502₁, ..., 502ₙ), direkt in den internen Arbeitsspeicher von mindestens einem digitalen Computer (500₁, ..., 500ₙ) ladbar, umfassend Softwarecodeabschnitte zum Durchführen der Schritte nach einem der Ansprüche 8-11, wenn das Produkt (502₁, ..., 502ₙ) auf dem Computer (500₁, ..., 500ₙ) ausgeführt wird.

## Revendications

1. Système de télécommunication pour la différenciation de services supports entre différents opérateurs dans un réseau partagé (305) des opérateurs, le réseau partagé (305) étant inclus dans ledit système de télécommunication, ledit système de télécommunication comprenant en outre au moins des premier et second réseaux centraux (301, 302), le premier réseau central (301) appartenant à un premier opérateur et le second réseau central (302) appartenant à un second opérateur, et au moins un noeud (306, 307), inclus dans le réseau partagé (305), pour contrôler les fonctions du réseau partagé (305), ledit noeud (306, 307) connectant le réseau partagé (305) aux premier et second réseaux centraux (301, 302),
**caractérisé en ce que** les au moins premier et second réseaux centraux (301, 302) sont conçus pour être connectés par l'intermédiaire de différentes interfaces (Iu1, Iu2, Iu3, Iu4) au réseau partagé (305), et **en ce que** le système comprend un moyen de sélection (309) pour sélectionner des services supports pour les premier et second opérateurs de réseau central,
le moyen de sélection (309) étant conçu pour baser la sélection des services supports sur l'interface (Iu1, Iu2, Iu3, Iu4) des premier et second réseaux centraux (301, 302) sur le réseau partagé (305).

2. Système de télécommunication selon la revendication 1, le système étant **caractérisé en ce qu'**il comprend un moyen de stockage (308) destiné à stocker une information sur les services supports qui sont accessibles aux premier et second opérateurs des premier et second réseaux centraux (301, 302) par l'intermédiaire des différentes interfaces (Iu1, Iu2, Iu3, lu4), le moyen de sélection (309) étant conçu pour baser la sélection sur cette information.

3. Système de télécommunication selon la revendication 2, **caractérisé en ce que** ledit moyen de stockage (308) est situé dans le réseau partagé (305).

4. Système de télécommunication selon la revendication 2 ou 3, **caractérisé en ce que** l'information sur les services supports qui sont accessibles aux premier et second opérateurs des premier et second réseaux centraux (301, 302) par l'intermédiaire des différentes interfaces (Iu1, Iu2, Iu3, Iu4) est basée sur des accords passés à l'avance entre les premier et second opérateurs des premier et second réseaux centraux (301, 302) et un opérateur du réseau partagé (305).

5. Système de télécommunication selon l'une quelconque des revendications 1 à 4, le système étant **caractérisé en ce qu'**il est conçu pour fournir, pour le même service, les mêmes services supports à tous les abonnés associés aux premier et second opérateurs des premier et second réseaux centraux (301, 302), qui sont connectés par l'intermédiaire d'une seule et même interface (Iu1, Iu2, Iu3, Iu4) entre le réseau partagé (305) et les premier et second réseaux centraux (301, 302) des premier et second opérateurs.

6. Système de télécommunication selon l'une quelconque des revendications 1 à 5, **caractérisé en ce que**, pour chacun des premier et second réseaux centraux (301, 302), il y a au moins une interface (Iu1, Iu2, Iu3, Iu4) pour les données avec commutation de circuits entre les premier et second réseaux centraux (301, 302) et le réseau partagé (305), et au moins une interface (Iu1, Iu2, Iu3, Iu4) pour les données avec commutation de paquets entre les premier et second réseaux centraux (301, 302) et le réseau partagé (305).

7. Système de télécommunication selon l'une quelconque des revendications 1 à 6, **caractérisé en ce que** le réseau partagé (305) se présente sous la forme d'un réseau d'accès radio, RAN, (305), **en ce que** le noeud (306, 307) de contrôle des fonctions du RAN (305) se présente sous la forme d'un contrôleur de réseau radio, RNC, (306, 307), et **en ce que** les services supports comprennent des services supports d'accès radio, RAB.

8. Procédé de différenciation de services supports entre différents opérateurs dans un réseau partagé (305) des opérateurs, le réseau partagé (305) étant inclus dans un système de télécommunication, ledit système de télécommunication comprenant en outre au moins des premier et second réseaux centraux (301, 302), le premier réseau central (301) appartenant à un premier opérateur et le second réseau central (302) appartenant à un second opérateur, et au moins un noeud (306, 307), inclus dans le réseau partagé (305), pour contrôler les fonctions du réseau partagé (305), ledit noeud (306, 307) connectant le réseau partagé (305) aux premier et second réseaux centraux (301, 302), **caractérisé par** l'étape consistant à connecter les au moins premier et second réseaux centraux (301, 302) par l'intermédiaire de différentes interfaces (Iu1, Iu2, Iu3, Iu4) au réseau partagé (305), et par l'étape consistant à sélectionner des services supports pour les premier et second opérateurs de réseau central, la sélection étant basée sur l'interface (Iu1, Iu2, Iu3, Iu4) des premier et second réseaux centraux (301, 302) sur le réseau partagé (305).

9. Procédé selon la revendication 8, **caractérisé par** l'étape consistant à stocker dans le réseau partagé (305) une information sur les services supports qui sont accessibles aux premier et second opérateurs des premier et second réseaux centraux (301, 302) par l'intermédiaire des différentes interfaces (Iu1, Iu2, Iu3, Iu4), la sélection étant basée sur cette information.

10. Procédé selon la revendication 9, **caractérisé en ce que** l'information sur les services supports qui sont accessibles aux premier et second opérateurs des premier et second réseaux centraux (301, 302) par l'intermédiaire des différentes interfaces (Iu1, Iu2, Iu3, Iu4) est basée sur des accords passés à l'avance entre les premier et second opérateurs des premier et second réseaux centraux (301, 302) et un opérateur du réseau partagé (305).

11. Procédé selon l'une quelconque des revendications 8 à 10, **caractérisé en ce que**, pour le même service, les mêmes services supports sont fournis à tous les abonnés associés aux premier et second opérateurs des premier et second réseaux centraux (301, 302), qui sont connectés par l'intermédiaire d'une seule et même interface (Iu1, Iu2, Iu3, Iu4) entre le réseau partagé (305) et les premier et second réseaux centraux (301, 302) des premier et second opérateurs.

12. Produit de programme informatique (502₁, ..., 502ₙ) pouvant être chargé directement dans la mémoire interne d'au moins un ordinateur numérique (500₁, ..., 500ₙ), comprenant des parties de code logiciel pour réaliser les étapes selon l'une quelconque des revendications 8 à 11 quand ledit produit (502₁, ..., 502ₙ) est exécuté sur ledit ordinateur (500₁, ..., 500ₙ).
